Europäisches Patentamt

European Patent Office

Office européen des brevets

(11) Veröffentlichungsnummer: **0 433 980 A2**

# EUROPÄISCHE PATENTANMELDUNG

(21) Anmeldenummer: 90124583.7

(22) Anmeldetag: 18.12.90

(51) Int. Cl.5: **G06K 17/00**

(30) Priorität: 19.12.89 DE 3941817
16.11.90 DE 4036606

(43) Veröffentlichungstag der Anmeldung:
**26.06.91 Patentblatt 91/26**

(84) Benannte Vertragsstaaten:
**AT BE CH DE DK ES FR GB GR IT LI LU NL SE**

(71) Anmelder: **ESSELTE METO INTERNATIONAL
PRODUKTIONS GMBH
Brentanostrasse**

**W-6932 Hirschhorn/Neckar(DE)**

(72) Erfinder: **Heckmann, Rainer
Hainbrunnerstrasse 47
W-6932 Hirschhorn/N(DE)**

(74) Vertreter: **Schwepfinger, Karl-Heinz, Dipl.-Ing.
et al
Prinz, Leiser, Bunke & Partner Manzingerweg
7
W-8000 München 60(DE)**

(54) **Etikettendrucker.**

(57) Es wird ein Etikettendrucker beschrieben, mit dessen Hilfe Etiketten bedruckt werden können. Der Drucker (10) enthält einen Druckkopf (20) zum Erzeugen der Aufdrucke sowie eine Transportvorrichtung (18) zum Vorbeibewegen der Etiketten (33) an den Druckkopf (20). Dem Drucker (10) ist ein Speicher (22) zugeordnet, in dem Artikelnummern und zugehörige Preisangaben gespeichert sind. Es ist eine Etikettenaufnahmevorrichtung (26, 28) vorgesehen, die der Aufnahme der mit einer neuen Preisangabe zu bedruckenden Etiketten (33) dient. An der Bewegungsbahn der Etiketten (33) ist eine Lesevorrichtung (32) zum Ablesen einer auf einem Etikett (33) aufgedruckten Artikelnummer angeordnet. Eine Auswertungs- und Steuerschaltung (14) ruft auf der Basis der gelesenen Artikelnummer die zu dieser in dem Speicher (22) gespeicherte Preisangabe ab und führt sie dem Druckkopf (20) als die auf ein Etikett (33) zu druckende neue Preisangabe zu.

Fig. 1

## ETIKETTENDRUCKER

Die Erfindung bezieht sich auf einen Etikettendrucker mit einem Druckkopf und einer Transportvorrichtung zum Vorbeibewegen von zu bedruckenden Etiketten am Druckkopf, wobei dem Drucker ein Speicher zugeordnet ist, in dem Artikelnummern und zugehörige Preisangaben gespeichert sind.

Mit Hilfe eines Druckers dieser Art, wie er beispielsweise von der Firma Esselte Meto International unter der Bezeichnung METO 8100 hergestellt und vertrieben wird, können Etiketten bedruckt werden, die in Kaufhäusern an Waren angebracht werden. Auf dem Etikett wird mit diesem Drucker nicht nur der Preisaufdruck erzeugt, sondern es wird auch eine Artikelnummer aufgedruckt, die der Ware eindeutig zugeordnet ist. Die Artikelnummer kann dabei entweder in Klarschrift oder auch in Form eines Bar-Codes aufgedruckt werden, wobei lediglich wichtig ist, daß der Aufdruck mit Hilfe einer Lesevorrichtung abgelesen werden kann. Die Artikelnummer kann an der Kasse mit Hilfe einer Lesevorrichtung gelesen werden, und an der Kasse kann dann der dieser Artikelnummer zugeordnete Preis angezeigt und entsprechend auch kassiert werden.

Es kommt in Kaufhäusern regelmäßig vor, daß sich die einem bestimmten Artikel zugeordneten Preise ändern. Besonders häufig tritt dieser Fall bei Sonderangebotaktionen ein. Eine solche Preisänderung macht es erforderlich, daß die an den Waren angebrachten Etiketten einzeln mit der neuen Preisangabe versehen werden. In der Regel wird diese Änderung von Hand durchgeführt, indem der alte Preis durchgestrichen und der neue Preis auf das Etikett geschrieben wird. Es ist prinzipiell möglich, neue Etiketten mit dem neuen Preis zu drucken, jedoch ist es manchmal erwünscht, daß der Kunde erkennen kann, daß der Artikel im Preis reduziert worden ist. Die Umzeichnung von Hand erfordert einen hohen Zeitaufwand; ferner besteht die Möglichkeit von Fehlern, da bei der Umzeichnung von Hand nicht immer gewährleistet ist, daß der richtige neue Preis auf das entsprechende Etikett geschrieben wird. Es sollte aber unter allen Umständen vermieden werden, daß eine Preisangabe auf das Etikett geschrieben wird, die eigentlich für eine andere Ware gedacht war, so daß unter Umständen ein wesentlich zu niedriger Preis für die Ware verlangt wird.

Der Erfindung liegt die Aufgabe zugrunde, einen Drucker zu schaffen, mit dessen Hilfe die auf dem Etikett enthaltene Preisangabe mit großer Sicherheit gegen Fehler und auf unterschiedliche, wahlweise zur Verfügung stehende Arten geändert werden kann.

Diese Aufgabe wird erfindungsgemäß gelöst durch eine Etikettenaufnahmevorrichtung zur Aufnahme der mit einer neuen Preisangabe zu bedruckenden Etiketten, einer an der Bewegungsbahn der Etiketten angeordnete Lesevorrichtung zum Ablesen einer auf einem Etikett aufgedruckten Artikelnummer und eine Auswertungs-und Steuerschaltung, die auf der Basis der gelesenen Artikelnummer die zu dieser in dem Speicher gespeicherte Preisangabe aus dem Speicher abruft und an den Druckkopf als die auf das Etikett zu druckende neue Preisangabe anlegt.

Bei Verwendung des erfindungsgemäßen Druckers kann ein Etikett mit einem neuen Preisaufdruck versehen werden, wobei die neue Preisangabe anhand der abgelesenen Artikelnummer bestimmt wird. Das Etikett wird dazu in die Etikettenaufnahmevorrichtung eingeführt, worauf es von der Transportvorrichtung erfaßt wird. Die Lesevorrichtung liest die auf dem Etikett aufgedruckte Artikelnummer, woraufhin die Auswertungs- und Steuerschaltung anhand der Artikelnummer aus dem Speicher die neue Preisangabe holt. Nachdem die Lesevorrichtung die Artikelnummer gelesen hat und die dieser Artikelnummer zugeordnete neue Preisangabe feststeht, besteht die Wahlmöglichkeit, daß der Drucker die neue Preisangabe auf das Etikett druckt, von dem er die Artikelnummer abgelesen hat. Außerdem besteht die Möglichkeit, daß ein neues Etikett gedruckt wird, das dann auf das alte Etikett, von dem die Artikelnummer abgelesen worden ist, aufgeklebt wird. Es besteht auch die Möglichkeit, daß ein völlig neues Etikett gedruckt wird, das bis auf die neue Preisangabe alle Informationen enthält, die auf dem Etikett vorhanden waren, von dem die Artikelnummer abgelesen worden ist. Diese Option ist dann günstig, wenn das alte Etikett bereits unbrauchbar war und durch ein neues ersetzt werden sollte.

Somit muß zum Ändern einer Preisangabe die Bedienungsperson lediglich die Etiketten in die Etikettenaufnahmevorrichtung einführen, damit anhand der Artikelnummer die neue Preisangabe festgelegt werden kann. Nach Auswahl der entsprechenden Option wird dann der Druckvorgang automatisch ausgeführt. Dies bedeutet aber, daß die Eingabe des geänderten Preises nicht erforderlich ist, so daß die entsprechende Fehlermöglichkeit sowohl beim Ablesen der Artikelnummer als auch bei der Zuordnung und beim Eingeben der neuen Preisangabe wegfällt.

Vorteilhafte Weiterbildungen der Erfindung sind in den Unteransprüchen gekennzeichnet.

Ausführungsbeispiele der Erfindung sind in der Zeichnung dargestellt. Es zeigen:

Fig. 1 eine schematische Darstellung eines erfindungsgemäßen Etikettendruckers und

Fig. 2 eine zweite Ausführungsform eines erfindungsgemäßen Etikettendruckers ebenfalls in einer schematischen Darstellung.

Der in der Zeichnung dargestellte Drucker 10 enthält ein nur mit seiner Umrißlinie dargestelltes Gehäuse 12, in dem die Druckerelektronik 14 und die Druckermechanik 16 untergebracht sind. Wenn der Drucker 10 zum Bedrucken neuer Etiketten eingesetzt wird, enthält er üblicherweise ein aus hintereinander angeordneten Etiketten bestehendes Band, das mit Hilfe der Transportvorrichtung 18 an einem Druckkopf 20 vorbeibewegt und dabei mit Produkt- und Preisangaben bedruckt wird. Die auf die Etiketten gedruckten Informationen kommen aus einem in der Druckerelektronik 14 enthaltenen Speicher 22. Die Eingabe in diesen Speicher kann über eine nicht dargestellte Tastatur am Drucker 10 oder auch über eine Anschlußbuchse 24 erfolgen, mit der der Drucker 10 an einen Zentralcomputer angeschlossen werden kann, der die notwendigen Druckinformationen liefert.

Der in der Zeichnung dargestellte Drucker 10 enthält spezielle Vorrichtungen, mit deren Hilfe er bereits bedruckte Etiketten mit neuen Preisangaben bedrucken kann. Der Drucker 10 enthält zu diesem Zweck eine Etikettenaufnahmevorrichtung, die die Form von zwei Führungsblechen 26, 28 haben kann. In der Seitenwand des Gehäuses 12 ist ein Schlitz angebracht, der dem Spalt zwischen den beiden Führungsblechen 26, 28 entspricht, so daß ein bereits bedrucktes Etikett von der Seite her zwischen die beiden Führungsbleche 26, 28 eingeführt werden kann. In dem Spalt kann das Etikett in der Zeichnungsdarstellung soweit nach links verschoben werden, bis es in Kontakt mit der Transportvorrichtung 18 kommt. Diese Transportvorrichtung 18 besteht aus einer Anpreßwalze 30, die von einem Motor so angetrieben wird, daß es sich zunächst in der Zeichnungsdarstellung entgegen dem Uhrzeigersinn dreht.

Wenn die Anpreßwalze 30 ein ihr zugeführtes Etikett erfaßt, preßt sie es gegen den Druckkopf 20 und transportiert es dabei in der Zeichnungsdarstellung nach links. Das Etikett wird dabei soweit transportiert, bis es in den Bereich einer Lesevorrichtung 32 kommt, die auf der Oberseite des Druckers 10 angebracht ist. In der Zeichnung ist ein in diese Position transportiertes Etikett 33 dargestellt. Bei der Lesevorrichtung 32 kann es sich beispielsweise um einen Lesestift handeln, wie er in immer größerem Umfang an den sogenannten Skanner-Registrierkassen zum Ablesen der auf Etiketten aufgedruckten Artikelnummern verwendet wird. Bei diesem Ablesevorgang an einer Skanner-Registrierkasse wird anhand der abgelesenen Artikelnummer der dieser Artikelnummer zugeordnete Preis aus einem zentralen Speicher abgerufen und an der Registrierkasse zur Anzeige gebracht. Auf diese Weise erübrigt sich das bisher angewendete manuelle Eintippen der Verkaufspreise.

Diese Lesevorrichtung 32 kann die auf dem bereits bedruckten Etikett 33 vorhandene Artikelnummer lesen, sobald das Etikett 33 von der Transportvorrichtung 18 in den Lesebereich bewegt worden ist. Die Lesevorrichtung 32 steht über eine nicht dargestellte Verbindung mit der Druckerelektronik 14 und/oder über die Anschlußbuchse 24 mit einem Zentralcomputer in Verbindung.

Sobald die Artikelnummer erfolgreich gelesen worden ist, wird von der Druckerelektronik 14 ein Steuersignal erzeugt, das bewirkt, daß die Transportvorrichtung 18 das Etikett 33 wieder soweit in der Zeichnungsdarstellung nach rechts bewegt, daß der Druckkopf 20 eine neue Preisangabe auf das Etikett 33 drucken kann. Die neue Preisangabe kann dabei aus dem Speicher 22 kommen, wobei zur Adressierung dieser Preisangabe die abgelesene Artikelnummer verwendet wird. Je nach Ausgestaltung der Druckerelektronik 14 kann die Preisangabe aber auch direkt vom Zentralcomputer über die Anschlußbuchse 24 kommen. Nach dem Druckvorgang wird das Etikett 33 dann wieder nach links bis zu einer Etikettenabgabestelle transportiert, in der es von der Bedienungsperson aus dem Drucker so entnommen werden kann.

Die oben angegebene Schilderung läßt erkennen, daß mit dem beschriebenen Drucker in sehr einfacher Weise Etiketten, die bereits mit Produkt- und Preisangaben bedruckt sind, mit einer neuen Preisangabe bedruckt werden können. Da jedes Etikett mit einer Artikelnummer versehen ist, der die neue Preisangabe eindeutig zugeordnet ist, können die zu ändernden Etiketten in beliebiger Reihenfolge in die Etikettenaufnahmevorrichtung eingeführt werden, was eine große Erleichterung bei der Bedienung darstellt. Es muß nicht darauf geachtet werden, daß zunächst alle Etiketten eingeführt werden, die mit der gleichen neuen Preisangabe versehen werden sollen und daß dann erst Etiketten mit anderen neuen Preisangaben eingeführt werden, da, wie gesagt, durch Vorsehen der Lesevorrichtung 32 und dem Ablesen der Artikelnummer stets sichergestellt ist, daß die richtige neue Preisangabe auf das Etikett gedruckt wird.

In der Zeichnung ist die Lesevorrichtung auf der linken Seite des Druckkopfs 20 angeordnet, was bedeutet, daß die Transportvorrichtung 18 das Etikett 33 zunächst bis in den Bereich der Lesevorrichtung 32 transportieren muß, worauf das Etikett 33 dann wieder in die Druckposition zurückbewegt und schließlich zu der Etikettenabgabestelle vorwärtsbewegt werden muß. Diese Anordnung der Lesevorrichtung 32 erfordert somit eine Umsteuerung des die Anpreßwalze antreibenden, in der Zeichnung nicht dargestellten Motors. Es ist ohne weiteres auch möglich, die Lesevorrichtung 32 bereits im Bereich vor dem Druckkopf 20 anzubringen, so daß das Ablesen der Artikelnummer bereits erfolgt, nachdem das Etikett von der Anpreßwalze erfaßt und in der Zeichnungsdarstellung nach links transportiert wird. In diesem Fall kann die Anpreßwalze 30 stets in der gleichen Richtung gedreht werden und der Druckvorgang kann sich unmittelbar an den Lesevorgang anschließen.

Da die Artikelnummer bei verschiedenen Etiketten an verschiedenen Stellen aufgedruckt sein kann, ist es vorteilhaft, wenn die Lesevorrichtung 32 so auf der Oberseite des Druckers 10 angebracht wird, daß die Position ihrer Lesespitze 32a bezüglich des Etikettes verändert werden kann. Im Ausführungsbeispiel der Zeichnung kann dies beispielsweise dadurch erfolgen, daß die Lesevorrichtung 32 in dem schematisch dargestellten Halter 34 nach vorne oder nach hinten verschoben wird.

Der beschriebene Drucker ermöglicht somit in sehr einfacher Weise die sichere und fehlerfreie automatische Änderung von Preisangaben auf bereits bedruckten Etiketten.

Die obige Ausführungsform des Etikettendruckers bewirkt das Aufdrucken eines neuen Preises auf ein bereits bedrucktes Etikett. Es ist aber auch möglich, den Drucker so einzusetzen, daß nach dem Ablesen eines bereits bedruckten Etiketts, insbesondere der darauf befindlichen Artikelnummer, ein völlig neues Etikett bedruckt wird, das vorteilhafterweise ein kleineres Format als das abgelesene Etikett hat und auf dem nur ein neuer Preis aufgedruckt ist. Dieses neu gedruckte Etikett mit der Preisangabe wird dann über die alte Preisangabe des Etiketts geklebt, von dem die Artikelnummer abgelesen worden ist. Auch bei dieser Anwendung wird vermieden, daß eine Artikelnummer und eine neue Preisangabe in den Drucker eingegeben werden müssen. Das Ablesen und das Drucken der neuen Preisangabe erfolgen vielmehr völlig automatisch.

Außerdem ist es möglich, ein völlig neues Etikett zu drucken, nachdem von einem alten Etikett die Artikelnummer abgelesen worden ist, wobei das neue Etikett dann bis auf die geänderte Preisangabe alle Informationen enthält, die bereits auf dem ursprünglichen Etikett enthalten waren. Das neue Etikett kann dann anstelle des alten Etiketts an der Ware angebracht werden.

Die geschilderten Anwendungsmöglichkeiten zeigen die Vielseitigkeit des beschriebenen Etikettendruckers.

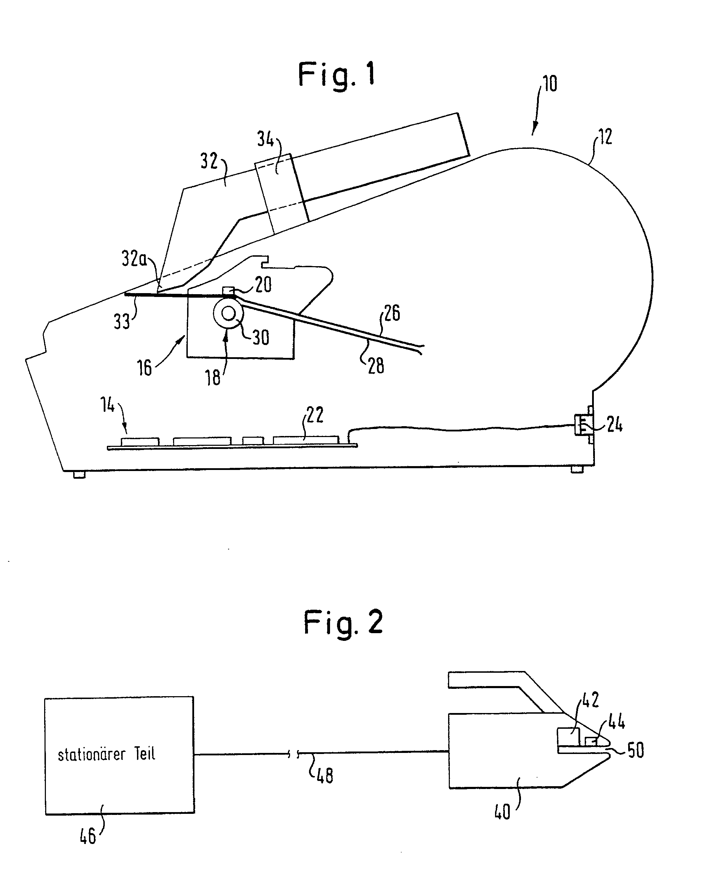

Bei der in Fig. 2 dargestellten Ausführungsform des Etikettendruckers sind in einem Handgerät 40 ein Druckkopf 42 und eine Lesevorrichtung 44 untergebracht, während in einem stationären Teil 46 ein Speicher angebracht ist, in dem Artikelnummern und jeweils diesen zugeordnete Preisdaten gespeichert sind. Außerdem kann sich in dem stationären Teil auch die Ansteuerelektronik für den Druckkopf 42 und die Lesevorrichtung 44 befinden. Der stationäre Teil 46 ist über ein Kabel 48 mit dem Handgerät 40 verbunden. Die Datenübertragung zwischen dem Handgerät 40 und dem stationären Teil 46 kann auch über eine drahtlose Verbindung (z.B. Infrarot, HF und dgl.) gewährleistet werden.

Der Etikettendrucker von Fig. 2 eignet sich besonders für Anwendungsfälle, in denen Etiketten mit neuen Preisaufdrucken versehen werden sollen, die an Kleidungsstücken wie Jacken, Hosen, Röcken angebracht sind, und bei denen es schwierig ist, sie in die Etikettenaufnahmevorrichtung eines als Tischgerät ausgebildeten Etikettendruckers einzuführen. Beim Etikettendrucker nach Fig. 2 kann das Handgerät 40 mit einer Hand zu dem Kleidungsstück bewegt werden, und mit der anderen Hand kann das daran befestigte Etikett in den Einführungsschlitz 50 geschoben werden. Sobald das Etikett vollständig eingeschoben ist, wird die auf ihm befindliche Artikelnummer gelesen, worauf dann die im Speicher dieser Nummer zugeordnete neue Preisangabe auf das Etikett gedruckt wird.

Falls erwünscht, kann der stationäre Teil 46 mit einem Anschluß zu einem Zentralrechner versehen sein, damit die Daten in den Speicher vom Ort des Zentralrechners aus eingegeben werden können. Der Speicherinhalt kann auf diese Weise immer auf dem aktuellen Stand der Preisdaten gehalten werden.

## Ansprüche

1. Etikettendrucker mit einem Druckkopf und einer Transportvorrichtung zum Vorbeibewegen von zu bedruckenden Etiketten am Druckkopf, wobei dem Drucker ein Speicher zugeordnet ist, in dem Artikelnummern und zugehörige Preisangaben gespeichert sind, gekennzeichnet durch eine Etikettenaufnahmevorrichtung (26, 28; 50) zur Aufnahme der mit einer neuen Preisangabe zu bedruckenden Etiketten (33), eine an der Bewegungsbahn der Etiketten (33) angeordnete Lesevorrichtung (32; 44) zum Ablesen einer auf einem Etikett (33) aufgedruckten Artikelnummer und einer Auswertungs- und Steuerschaltung (14), die auf der Basis der gelesenen Artikelnummer die zu dieser in dem Speicher gespeicherte Preisangabe aus dem Speicher abruft und an den Druckkopf als die auf das Etikett (33) zu druckende neue Preisangabe anlegt.

2. Etikettendrucker nach Anspruch 1, dadurch gekennzeichnet, daß sich die von der Lesevorrichtung (32) abzulesenden Artikelnummern auf dem zu bedruckenden Etikett (33) befinden.

3. Etikettendrucker nach Anspruch 1 oder 2, dadurch gekennzeichnet, daß die Lesevorrichtung (32) bezüglich der Bewegung des zu bedruckenden Etiketts (33) hinter dem Druckkopf (20) angeordnet ist und daß die Transportvorrichtung (18) eine das zu bedruckende Etikett (33) gegen den Druckkopf (20) drückende Anpreßwalze (30) enthält, die zum Transportieren des Etiketts (33) zu der Lesevorrichtung (32) zunächst in Vorwärtsrichtung, dann nach dem Lesen der auf dem Etikett (33) aufgedrucken Artikelnummer zum Zurückführen des Etiketts (33) zu dem Druckkopf (20) in Rückwärtsrichtung und dann nach dem Bedrucken des Etiketts (33) zu dessen Freigabe wieder in Vorwärtsrichtung angetrieben wird.

4. Etikettendrucker nach Anspruch 2, dadurch gekennzeichnet, daß in Abhängigkeit von den abgelesenen Artikelnummern weitere Etiketten gedruckt werden, die auf das Etikett (33) geklebt werden, von dem die Artikelnummer abgelesen wurde.

5. Etikettendrucker nach Anspruch 1, dadurch gekennzeichnet, daß das mit einer Artikelnummer versehene Etikett nach dem Ablesen der Artikelnummer ausgegeben und danach das zu bedruckende Etikett (33) in die Etikettenaufnahmevorrichtung (26, 28) eingelegt und bedruckt wird.

6. Etikettendrucker nach einem der Ansprüche 1 bis 5, dadurch gekennzeichnet, daß die Lesevorrichtung (32) zwischen der Etikettenaufnahmevorrichtung (26, 28) und dem Druckkopf (20) angebracht ist und daß die Transportvorrichtung (18) eine in einer Drehrichtung angetriebene Anpreßwalze (30) enthält, die das zu bedruckende Etikett (33) gegen den Druckkopf (20) drückt.

7. Etikettendrucker nach einem der vorhergehenden Ansprüche, dadurch gekennzeichnet, daß die Position der Lesevorrichtung (32) bezüglich des Druckkopfs (20) und der Transportvorrichtung (18) verstellbar ist.

8. Etikettendrucker nach Anspruch 1, dadurch gekennzeichnet, daß der Druckkopf (42) und die Lesevorrichtung (44) in einem Handgerät (40) untergebracht sind, das mit einem Einführungsschlitz (50) für ein zu bedruckendes Etikett versehen ist, und das mit dem Speicher über ein Kabel (48) oder drahtlos in Verbindung steht.

# Fig. 1

# Fig. 2